(19) Europäisches Patentamt
European Patent Office
Office européen des brevets

(11) Veröffentlichungsnummer: **0 001 579**
**B1**

(12) # EUROPÄISCHE PATENTSCHRIFT

(21) Anmeldenummer: **78101038.4**

(22) Anmeldetag: **30.09.78**

(51) Int. Cl.³: **C 08 G 63/62, C 08 J 3/24, C 08 J 3/28**

(54) **Polycarbonate mit UV-Licht-vernetzbaren, Doppelbindungen enthaltenden Endgruppen, ihre Herstellung und ihre Modifizierung**

(30) Priorität: **13.10.77 DE 2746139**
**04.07.78 DE 2829258**

(43) Veröffentlichungstag der Anmeldung:
**02.05.79 Patentblatt 79/09**

(45) Bekanntmachung des Hinweises auf die Patenterteilung:
**03.09.80 Patentblatt 80/18**

(84) Benannte Vertragsstaaten:
**DE FR GB NL**

(56) Entgegenhaltungen:
**DE - A - 1 930 257**
**US - A - 3 600 288**
**US - A - 3 622 331**
**US - A - 3 787 302**

(73) Patentinhaber: **Bayer AG**
**Zentralbereich Patente, Marken und Lizenzen**
**D - 5090 Leverkusen 1, Bayerwerk (DE)**

(72) Erfinder: **Adelmann, Siegfried, Dr.**
**Bodelschwinghstrasse 18**
**D - 4150 Krefeld (DE)**
**Margotte, Dieter, Dr.**
**Wedelstrasse 48**
**D - 4150 Krefeld (DE)**
**Vernaleken, Hugo, Dr.**
**Kreuzbergstrasse 147**
**D - 4150 Krefeld (DE)**

**EP 0 001 579 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Polycarbonate mit UV-Licht-vernetzbaren Doppelbindungen enthaltenden Endgruppen, ihre Herstellung und ihre Modifizierung

Gegenstand der vorliegenden Erfindung sind neue hochmolekulare vernetzbare Polycarbonate mit Molekulargewichten $\bar{M}_w$ (Gewichtsmittel) von 10.000 bis 200.000, bevorzugt 20.000 bis 80.000, auf Basis von Diphenolen und monofunktionellen Kettenabbrechern, dadurch gekennzeichnet, daß sie der Formel (I) entsprechen

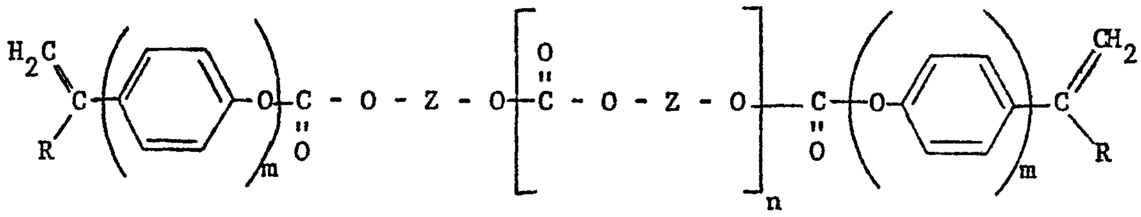 (I)

in der Z = Rest eines Diphenols,
n = eine ganze Zahl von 20 bis 400,
m = 0 oder 1, und
R = H oder $C_1$—$C_3$-Alkyl bedeuten.

Gegenstand der vorliegenden Erfindung ist außerdem ein Verfahren zur Herstellung neuer hochmolekularer Polycarbonate mit $\bar{M}_w$ von 10.000 bis 200.000, bevorzugt 20.000 bis 80.000, das dadurch gekennzeichnet ist, daß man Diphenole der Formel (II)

$$HO—Z—OH \quad (II),$$

worin Z ein zweiwertiger aromatischer Rest ist, der gegebenenfalls Alkyl- oder Halogen-substituiert sein kann, und der vorzugsweise 6 bis 30 C-Atome enthält, und/oder deren Chlorkohlensäureester nach den für die Herstellung von Polycarbonaten üblichen Verfahren in homogener oder heterogener Phase, bei Verwendung von 0,05 bis 5 Mol %, vorzugsweise 0,1 bis 4 Mol %, bezogen auf Mole an eingesetzten Struktureinheiten Z, von Verbindungen der Formel (III)

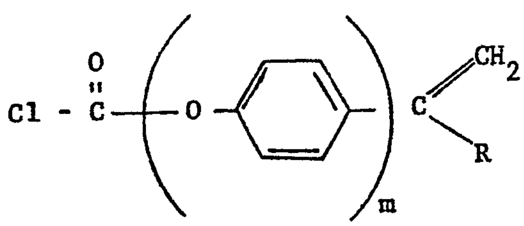 (III),

worin m und R die für Formel (I) angegebene Bedeutung haben, umsetzt.

Neben den erfindungsgemäß zu verwendenden Kettenabbrechern gemäß Formel (III) können auch alle üblichen für die Polycarbonat-Synthese geeigneten monofunktionellen Phenole mitverwendet werden.

Polycarbonate sind bekannt und haben aufgrund ihrer hervorragenden Eigenschaften auf vielen Anwendungsgebieten Verwendung gefunden. Für spezielle Anwendungen reicht jedoch z.B. die Beständigkeit gegen organische Lösungsmittel und gegen Spannungsrißkorrosion nicht aus.

Die erfindungsgemäßen Polycarbonate zeigen im Vergleich zu den üblicherweise nur mit Phenol, p-tert.-butylphenol oder 2,6-Dimethylphenol abgebrochenen Polycarbonaten keine abweichenden mechanischen oder thermischen Eigenschaften. Sie sind zudem, beispielsweise in Anwesenheit von Photoinitiatoren und gegebenenfalls Photoreduktionsmitteln unter Bestrahlung mit UV-Licht, zur Vernetzung geeignet und damit beständig gegen organische Lösungsmittel und unempfindlich gegen Spannungsrißbildung und ermöglichen, gegebenenfalls zusätzlich unter Verwendung von Flammschutzmitteln, die Herstellung von Polycarbonaten mit besonders gutem flammwidrigen Verhalten.

In US—PS 3 622 331 dient Zimtsäurechlorid als Reaktionspartner des fertigen Polycarbonats, was zu anderen Produkten führt. Dies zeigt sich schon darin, daß die nach US—PS 3 622 331 erhältlichen Produkte nicht extrudierbar sind, während die erfindungsgemäßen Polycarbonate thermoplastisch verarbeitbar und dann noch vernetzbar sind. Bei thermoplastischer Verarbeitung der gemäß US—PS hergestellten Produkte stellt man Abbau des Materials fest. Darüber hinaus ist der Unterschied im Verhalten der Produkte auch durch die geringere Stabilität der Doppelbindung im Zimtsäurerest begründet.

Gegenstand der vorliegenden Erfindung ist auch ein Verfahren zur Modifizierung von Polycarbonaten, das dadurch gekennzeichnet ist, daß man die erfindungsgemäßen Polycarbonate oder Polycarbonatgemische der Formel (I) nach Zusatz von 0,5 bis 5 Gew.-%, vorzugsweise 1 bis 3 Gew.-%, bezogen auf Gewicht Polycarbonat, eines Photoinitiators, und gegebenenfalls nach Zusatz von 0,5 bis 5 Gew.-%, vorzugsweise 1 bis 3 Gew.-%, bezogen auf Gewicht Polycarbonat, von Photoreduktionsmitteln und gegebenenfalls noch Zusatz von Flammschutzmitteln in Mengen von 0,05 bis 5 Gew.-%, vorzugsweise 0,1 bis 2 Gew.-%, bezogen auf Gewicht Polycarbonat, mit UV-Licht bestrahlt.

Gegenstand der vorliegenden Erfindung sind außerdem modifizierte Polycarbonate, erhältlich nach dem vorstehend genannten Verfahren.

Die zum Kettenabbruch eingesetzten Monomeren sind preiswert, auf dem Markt leicht zugänglich und lassen sich nach den für die Polycarbonat-Herstellung üblichen Verfahren ohne Schwierigkeiten in das Polymer einbauen, so daß unter wirschaftlichen Bedingungen leicht vernetzbare Polycarbonate hergestellt werden können.

Als Diphenole der Formel (II), die vorzugsweise 6 bis 30 C-Atome enthalten, sind beispielsweise geeignet: Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-äther, Bis-(hydroxyphenyl)-sulfoxide, Bis-(hydroxyphenyl)-sulfone, $\alpha,\alpha'$-Bis-(hydroxyphenyl)-diisopropylbenzole, sowie deren kernalkylierte und kernhalogenierte Verbindungen.

Diese und weitere geeignete Diphenole sind z.B. in den US-Patentschriften 3 028 365, 2 999 835, 3 148 172, 3 271 368, 2 991 273, 3 271 367, 3 280 078, 3 014 891 und 2 999 846, in den Deutschen Offenlegungsschriften 1 570 703, 2 063 050, 2 063 052, 2 211 956, 2 211 357, der Französischen Patentschrift 1 561 518 und in der Monographie "H. Schnell, Chemistry and Physics of Polycarbonates", Interscience Publishers, New York, 1964, beschrieben.

Bevorzugte Diphenole sind z.B.: 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Erfindungsgemaß geeignete Verbindungen der Formel (III) sind beispielsweise: Acrylsäurechlorid, Methacrylsäurechlorid, Isopropenylphenylchlorkohlensäureester und p-Hydroxystyrolchlorkohlensäureester.

Es können auch beliebige Mischungen der Diphenole der Formel (II) verwendet werden.

Die Polycarbonate können durch den Einbau geringer Mengen, vorzugsweise von Mengen zwischen 0,05 und 2,0 Mol-% (bezogen auf eingebaute Diphenole), an drei- oder mehr als dreifunktionellen Verbindungen, insbesondere solchen mit drei oder mehr als drei phenolischen Hydroxylgruppen verzweigt sein.

Polycarbonate dieser Art sind z.B. in den deutschen Offenlegungsschriften 1 570 533 1 595 762, 2 116 974, 2 113 347, der britischen Patentschrift 1 079 821, der US-Patentschrift 3 544 514 und in der deutschen Offenlegungsschrift 25 00 092 beschrieben.

Die Herstellung der erfindungsgemäßen Polycarbonate kann im wesentlichen nach folgenden zwei bekannten Verfahren (vergl. H. Schnell, Chemistry and Physics of Polycarbonates, Polymer Rev., Vol. IX, Seite 27 ff., Interscience Publishers) erfolgen, die im folgenden kurz beschrieben werden.

1. Herstellung eines aromatischen Polycarbonats in heterogener Phase (Phasengrenzflächenverfahren).

Hierbei werden die Diphenole der Formel (II) in wäßriger alkalischer Phase gelöst. Dazu werden die zur Herstellung der erfindungsgemäßen Polycarbonate erforderlichen Kettenregler gemäß Formel (III) in einem organischen Lösungsmittel gelöst oder in Substanz zugegeben. Nach Zugabe eines für Polycarbonat geeigneten Lösungsmittels entsteht ein zweiphasiges Gemisch, in das bei 0 bis 60°C Phosgen eingeleitet wird. Nach Zugabe eines Katalysators werden hochmolekulare Polycarbonate erhalten. Die Aufarbeitung erfolgt durch Washen der organischen Phase und anschließender Abdestillation des Lösungsmittels, z.B. in Ausdampfextrudem bei Temperaturen von 280 bis 330°C.

Geeignete organische Lösungsmittel für Polycarbonate und für die Verbindungen der Formel (III) sind die für die Polycarbonatsynthese bekannten, wie beispielsweise Methylenchlorid, Chlorbenzol sowie Mischungen daraus.

Geeignete Katalysatoren sind die für die Polycarbonatsynthese bekannten, wie beispielsweise Triäthylamin und Tributylamin.

2. Herstellung eines Polycarbonats in homogener Phase (Pyridinverfahren).

Die Diphenole gemäß der allgemeinen Formel (II) sowie die Kettenregler gemäß der allgemeinen Formel (III) werden in einer organischen Base, wie beispielsweise Pyridin, gelöst. Nach Zugabe von einem für Polycarbonat geeigneten Lösungsmittel wird Phosgen bei Temperaturen zwischen 0 und 60°C eingeleitet.

Das sich während der Reaktion bildende Pyridinhydrochlorid wird abfiltriert und die organische Phase mit verdünnter HCl und anschließend mit Wasser neutral gewaschen. Die Aufarbeitung erfolgt ebenfalls wie unter 1) beschrieben, beispielsweise durch Abdampfen des Lösungsmittels in einer Ausdampfschnecke.

Neben dem Pyridin geeignete organischen Basen sind beispielsweise Triäthylamin und Tributylamin. Als Lösungsmittel für Polycarbonat können Methylenchlorid und Chlorbenzol sowie Mischungen daraus verwendet werden.

Setzt man neben oder anstelle der Diphenole der Formel (II) deren Chlorkohlensäureester ein, so berechnen sich die notwendigen Mengen an Kettenabbrechern für die Verfahren unter 1) und 2) sinngemäß aus den Struktureinheiten Z, resultierend aus der Summe der Bisphenole der Formel (II) und deren Chlorkohlensäureester.

Für die Modifizierung der erfindungsgemäßen Polycarbonate mittels beispielsweise UV-Bestrahlung sind im Prinzip alle Polycarbonat-verträglichen Photoinitiatoren geeignet, so beispielsweise Photoinitiatoren auf Basis aliphatischer und aromatischer Ketone im weitesten Sinne, wie beispielsweise unter Einbeziehung von Glyoxalaten und Chinonen. Ketone im engeren Sinne und Glyoxalate sind beispielsweise Acetophenon, Benzil, Benzoin, Benzoinmethyläther, Benzoinisopropyläther, Benzophenon, p-Chlorbenzophenon, p-Benzoylbenzophenon, Dibenzalaceton, Benzovlaceton, Benzylaceton, Desoxybenzoin, 2,4-Dimethylbenzophenon, 2,5-Dimethylbenzophenon, 3,4-Dimethylbenzophenon, 4-Benzoyldiphenyl, 9-Fluorenon, 4,4-Bis-(dimethylamino)-benzophenon, 4-Dimethylaminobenzophenon, Dibenzylketon, 4-Methylbenzophenon, Propiophenon, Benzanthron, Äthylphenylglyoxalat, tert.-Butylphenylglyoxalat, Trimethylsilylphenylglyoxalat und andere.

Die aromatischen Ketone bzw. Glyoxalate sind bevorzugt. Insbesondere werden Benzophenon, Benzoin, p-Benzoylbenzophenon, tert.-Butylphenylglyoxalat, Trimethylsilylphenylglyoxalat bevorzugt.

Ebenfalls können als Photoinitiatoren Chinone verwendet werden, z.B.: Anthrachinon, 1-Chloroanthrachinon, 2-Chloroanthrachinon, 2-Äthylanthrachinon, 1-Methylanthrachinon, 2-Methylanthrachinon, 2-Phenylanthrachinon und andere. Bevorzugte Chinone sind 2-Methylanthrachinon, 2-Chloroanthrachinon und 2-Äthylanthrachinon.

Andere geeignete Photoinitiatoren sind dem Fachmann bekannt und können den folgenden Veroffentlichungen entnommen werden: J. Kosar, "Light-Sensitive Systems", John Wiley & Sons, New York, 1965, Chapters 4 ("Unsaturated Compounds"), 5 ("Photopolymerization Processes") und 8 (Photopolymerization of Vinyl Monomers), "Chem. Revs. *68,* 125—151 (1968); J. F. Rabek "Photosensitized Processes in Polymer Chemistry: A Review", Photochem. Photobiol. 1, 5—57 (1968), G. Delzenne, "Sensitizers of Photopolymerization", Ind. Chim. Belge *24,* 739—764 (1959); C. M. McCloskey and J. Bond, "Photosensitizers for Polyester-vinyl Polymerization", Ind. Eng. Chem. *47,* 2125—2129 (1955).

Die für die Modifizierung der erfindungsgemäßen Polycarbonate erforderliche UV-Bestrahlung erfolgt mit UV-Licht unter Verwendung von handelsüblichen UV-Strahlern, beispielsweise Philips HTQ 4 oder 7, Hanovia-Strahlern und anderen. Die Bestrahlungsdauer liegt je nach Gehalt an eingesetzten Photoinitiatoren und je nach Probenbeschaffenheit bei 20 bis 180 Sekunden.

Die für die Modifizierung der erfindungsgemäßen Polycarbonate geeigneten Flammschutzmittel sind beispielsweise die für die Flammfestmachung von Polycarbonaten bekannten und geeigneten Verbindungen und synergistisch wirkenden Substanzen, wie sie in den DT—OS 1 930 257, DT—OS 2 049 358, DT—OS 2 112 987, DT—OS 2 253 072 und anderen Literaturstellen beschrieben sind.

Geeignet sind z.B. Alkalisalze, insbesondere die in Polycarbonat löslichen, wie z.B. Kaliumisooctanat, Natriumisooctanat, Lithiumisooctanat, Kaliumperfluoroctanat, Natriumperfluoroctanat, Lithiumperfluoroctanat, Kaliumsalze der 5-Äthyl-dioxan-1,3-yl-(5)-carbonsäure, Rubidiumisooctanat, Rubidiumperfluoroctanat, und die Alkalisalze der Perfluoralkansulfonsäure, wie Kaliumperfluormethansulfonat, Kaliumperfluoroctansulfonat und Kaliumperfluorbutansulfonat. Des weiteren können Alkalisazle der Laurinsäure, Stearinsäure, Ölsäure, des Phthalsäuremonobenzylesters, des Adipinsäuremonobutylesters, der p-Octylbenzoesäure, p-tert.-Butylbenzoesäure, der 3-(3,5-di-tert.-Butyl-4-hydroxyphenyl)-propionsäure und des Diglykolsäuremonodecylesters verwendet werden.

Die Modifizierung der erfindungsgemäßen Polycarbonate erfolgt in zwei Stufen. Die erste Stufe ist die Binarbeitung des Photoinitiators und gegebenenfalls eines Flammschutzmittels uber.

a) Lösung und Isolierung als Film, oder uber

b) eine Compoundierung bei 280—330°C zu Granulat, und die zweite Stufe ist die UV-Bestrahlung bis zur Vernetzung, gegebenenfalls nach vorheriger Formgebung zu Platten oder anderen Spritzgußteilen.

Im Falle der Verfahrensvariante b) ist es günstig, dem Polycarbonat vor der Compoundierung Substanzen zuzusetzen, die den Photoinitiator, beispielsweise Benzophenon, aktivieren. Diese Erscheinung der Photoreduktion des Photoinitiators ist literaturbekannt. (J. Am. Chem. Soc. *83,* 2795 (1961), J. Am. Chem. Soc. *89,* 3471 (1967) und Angew. Chem. 1032 (1972)).

Geeignete Substanzen sind Verbindungen mit labilen CH-Bindungen wie beispielsweise Mesitylen, Dibenzyläther, Benzoesäurebenzylester und andere. Ebenfalls sind Polymere mit labilen CH-Bindungen zur Aktivierung geeignet z.B. Polyglykoläther, aliphatische Polyester und andere Verbindungen.

Eine alternative Möglichkeit der Aktivierung der Photoinitiatoren für die Modifizierung der erfindungsgemäßen Polycarbonate gemaß Verfahrensvariante b) besteht darin, die mit dem Photoinitiator ausgerüsteten Polycarbonate vor der Bestrahlung Dämpfen vonorganischen Verbindungen mit labilen CH-Bindungen auszusetzen und unmittelbar danach die Vernetzung mittels UV-Bestrahlung durchzuführen.

Als organische Verbindungen kommen hierfür beispielsweise Tetrahydrofuran, Dioxan, Chloroform, Toluol, Xylol, $CH_2Cl_2$ und ähnliche Verbindungen in Frage.

Die Menge des einzuarbeitenden Photoreduktionsmittels richtet sich jeweils nach der Menge des eingearbeiteten Photoinitiators, wobei im allgemeinen äquimolare Mengen Photoreduktionsmittel, bezogen auf Photoinitiator, zugesetzt werden.

Die Menge des in Dampfform einwirkenden Photoreduktionsmittels richtet sich außer nach der Menge des eingearbeiteten Photoinitiators vor allem nach der zu vernetzenden Oberfläche und Struktur des Polycarbonatformkörpers und nach der Intensität der angestrebten Vernetzungsreaktion.

Weitere Varianten der Ausrüstung der erfindungsgemäßen Polycarbonate, gegebenenfalls nach Einarbeitung von Flammschutzmitteln, mit Photoinitiatoren und gegebenenfalls Photoreduktionsmitteln sind Tauchen und Besprühen entsprechender Polycarbonatformkörper in bekannter Weise, beispielsweise analog dem Verfahren der DT—OS 2 211 641 und beispielsweise unter Verwendung von Lösungen der Photoinitiatoren und gegebenenfalls Photoreduktionsmittel in gegenüber Polycarbonat inerten Lösungsmitteln.

Die Menge der zu applizierenden Photoinitiatoren und gegebenenfalls Photoreduktionsmittel richtet sich wiederum vor allem nach der zu vernetzenden Oberfläche und Struktur der Polycarbonatformkörper sowie nach der Intensität der angestrebten Vernetzungsreaktion. Die zu applizierenden Mengen an Photoinitiator und gegebenenfalls an Photoreduktionsmittel gemä dieser letzteren Verfahrensvariante liegen jeweils in der Größenordung von $10^{-3}$ g $cm^2$ Polycarbonatoberfläche bei einer zu vernetzenden Oberflachenschicht von durchschnittlich 100$\mu$m. Die so ausgerüsteten Polycarbonatformkörper Modifizierung ebenfalls durchgeführt werden.

Benutzt man für die Bestrahlung der erfindungsgemäßen Polycarbonate eine andere energiereiche Strahlung, beispielsweise Elektronenstrahlung, insbesondere Kathodenstrahlung, so kann, gegebenenfalls nach Zusatz von Sensibilisatoren, die erfindungsgemäße Modifizierung ebenfalls durchgeführt werden.

Die erfindungsgemäß erhältlichen modifizierten Polycarbonat-Formmassen sind gegenüber organischen Lösungsmitteln beständig und zeichnen sich gegenüber herkömmlichen Polycarbonaten durch eine verbesserte Spannungsrißkorrosionsbeständigkeit aus. Sofern ihnen zudem Flammschutzmittel zugesetzt wurden, erhalt man schon bei geringen Zusätzen Produkte, die nach UL Subj. 94 mit VO beurteilt werden.

Die erfindungsgemäß erhältlichen modifizierten Polycarbonate können als Folien und Formdörper überall dort eingesetzt werden, wo hohe Beständigkeit gegen organische Lösungsmittel bei hoher Spannungsrißkorrosionsbeständigkeit gefordert wird.

Die folgenden Beispiele sollen den Erfindungsgegenstand näher erläutern. Die angegebenen relativen Viskositäten wurden in Methylenchlorid bei 25°C und einer Konzentration von 5 g/l gemessen.

### Beispiel 1

Polycarbonat, hergestellt unter Verwendung von 3,27 Mol % Methacrylsäurechlorid als Kettenabbrecher.

Aus 3,192kg 2,2-Bis-(4-hydroxyphenyl)-propan (Bisphenol A) (14 Mol), 2,53kg 45%iger wäßriger Natronlauge und 15l destilliertem Wasser wird eine Lösung hergestellt. Nach Zugabe von 34kg Methylenchlorid werden unter Rühren 52,2g Methacrylsäurechlorid (~0,5 Mol), in 1kg Methylenchlorid gelöst, bei Raumtemperatur zugefügt. Bei 20—25°C werden 2,64kg Phosgen eingeleitet. Durch Zugabe weiterer 26,3kg 6,5%iger Natronlauge während der Phosgenierung wird der pH-Wert bei 13 bis 14 gehalten. Anschließend werden 15ml Triäthylamin zugesetzt und 30 min nachgerührt. Dann wird die obere wäßrige Phase abgetrennt, die organische Phase angesäuert und elektrolyltfrei gewaschen. Anschließend wird aus der organischen Phase das Methylenchlorid über eine ZSK-Machine bei 300°C abgedampft und das Polycarbonat granuliert. Die relative Lösungsviskosität beträgt 1,30.

### Beispiel 2

Polycarbonat, hergestellt unter Verwendung von 3,4 Mol % Isopropenylphenylchlorkohlensäureester.

Die Herstellung sowie Aufarbeitung erfolgt nach dem in Beispiel 1 beschriebenen Verfahren unter Verwendung von 3,4 Mol % Isopropenylphenylchlorkohlensäureester. Die relative Lösungsviskosität beträgt 1,31.

### Beispiel 3 (Vergleichsbeispiel)

Polycarbonat, hergestellt unter Verwendung von 3,27 Mol % p-tert.-Butylphenol.

Die Herstellung sowie die Aufarbeitung erfolgt nach dem in Beispiel 1 beschriebenen Verfahren unter Verwendung von 3,27 Mol % p-tert.-Butylphenol. Die relative Lösungsviskosität beträgt 1,30.

Die Polycarbonate aus den Beispielen 1 bis 3 werden in Methylenchlorid gelöst und nach Zugabe der in nachfolgender Tabelle angegebenen Gewichtsmengen Benzophenon, bezogen auf Gewicht Polycarbonat, zu 100$\mu$m starken Filmen verarbeitet und bei 120°C über Nacht getrocknet.

Beispiel 4

Das Polycarbonat aus Beispiel 1 wird in Methylenchlorid gelöst und nach Zugabe von 1 Gew.-% Benzophenon, bezogen auf Gewicht Polycarbonat zusätzlich mit 1,5 Gew.-%, bezogen auf Gewicht Polycarbonat, Dibenzyläther ausgerüstet, zu 100$\mu$m starken Filmen verarbeitet und bei 120°C über Nacht getrocknet.

Anschließend werden die Filme der Beispiele 1 bis 4 45 bzw. 180 Sekunden beidseitig im Abstand von 15cm mit einem UV-Strahler Philips HTQ 4 (Quecksilberdampfhochdruckbrenner) bestrahlt. Die Filme werden mit Methylenchlorid behandelt und die vernetzten Anteile als unlösliche Fibrillen bzw. Filmstücke abfiltriert und nach Trocknung gravimetrisch bestimmt. Als Folge der unterschiedlichen Vernetzung der Polycarbonate der Beispiele 1 bis 4 unterliegen die Filme unterschiedlicher Spannungsrißkorrosion.

Zur Messung werden 1 cm breite, 100$\mu$m dicke Filmstreifen zu einer Schlauf mit einem Radius von 3cm gebogen und in Tetrachlorkohlenstoff getaucht. Die Zeit bis zum Zerspringen der Filmschlaufen infolge auftretender Spannungsrisse wird gemessen. Die Ergebnisse sind in der Tabelle I zusammengetaßt.

TABELLE I

| | Benzophenon-Gehalt Gew.–% | Dibenzyläther-Gehalt Gew.–% | Belichtungszeit sec. | unlöslicher Anteil in Gew.–% | beständig in Tetra++) sec. |
|---|---|---|---|---|---|
| Beispiel 1 | 1 | – | 180 | 60 | >180+) |
| | 2 | – | 45 | 20 | 45 |
| Beispiel 2 | 1,5 | – | 180 | 65 | >180+) |
| | 3 | – | 45 | 40 | 120 |
| Beispiel 3 (Vergleich) | 1,5 | – | 180 | – | <1 |
| | 3 | – | 45 | – | <1 |
| Beispiel 4 | 1 | 1,5 | 45 | 30 | 60 |
| | 1 | 1,5 | 180 | 80 | >180 |

+) nach 180 sec. wurde der Test abgebrochen

++ Tetra = Tetrachlorkohlenstoff

Beispiel 5

3916g des Polycarbonats aus Beispiel 1 werden zusammen mit 80g (2 Gew.-%) Benzophenon und 4g (0,1 Gew.%) Kaliumperfluorbutansulfonat in einer Doppelwellenschnecke bei 300°C vermischt und granuliert.

Beispiel 6

3876g des Polycarbonats aus Beispiel 2 werden mit 120g Benzophenon und 4g Kaliumperfluorbutansulfonat in einer Doppelwellenschnecke bei 300°C vermischt und granuliert.

Beispiel 7 (Vergleichsbeispiel)

3876g des Polycarbonats aus Beispiel 3 werden mit 120g Benzophenon und 4g Kaliumperfluorbutansulfonat in einer Doppelwellenschnecke bei 300°C vermischt und granuliert.

Die modifizierten Polycarbonate aus den Beispielen 5, 6 und 7 werden zu Normprüfstäben verspritzt und 45 sec mit einem Philips HTQ 4 Quecksilberdampfhochdruckbrenner im Abstand von 15cm beidseitig belichtet. Die gefundenen Brandeinstufungen sind in der Tabelle II zusammengefaßt.

TABELLE II

| | UL Subj. 94 1/8" | UL Subj. 94 1/16" |
|---|---|---|
| Beispiel 5 | V0 | V0 |
| Beispiel 6 | V0 | V0 |
| Beispiel 7 (Vergleich) | V2 | V2 |

**Patentansprüche**

1. Hochmolekulare aromatische Polycarbonate mit Molekulargewichten $\overline{M}_w$ (Gewichtsmittel) von 10.000 bis 200.000, auf Basis von Diphenolen und monofunktionellen Kettenabbrechern, dadurch gekennzeichnet, daß sie der Formel (I) entsprechen,

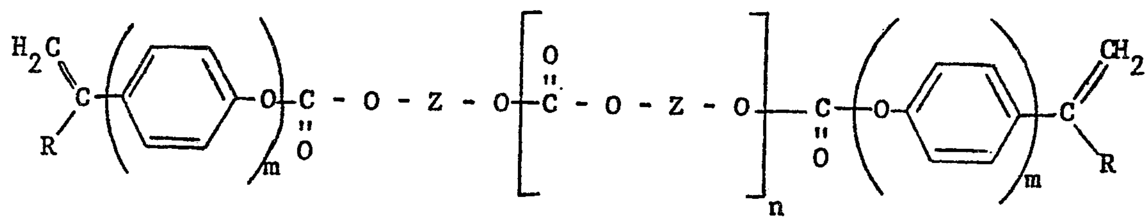

(I),

in der Z = Rest eines Diphenols,
n = eine ganze Zahl von 20 bis 400,
m = O oder 1, und
R = H oder $C_1$—$C_3$—Alkyl bedeuten.

2. Verfahren zur Herstellung von Polycarbonaten des Patentanspruchs 1, dadurch gekennzeichnet, daß man Diphenole der Formel (II)

$$HO—Z—OH \quad (II),$$

worin Z ein zweiwertiger aromatischer Rest ist, und/oder deren Chlorkohlensäureester nach den für die Herstellung von Polycarbonaten üblichen Verfahren in homogener oder heterogener Phase unter Verwendung von Verbindungen der Formel (III)

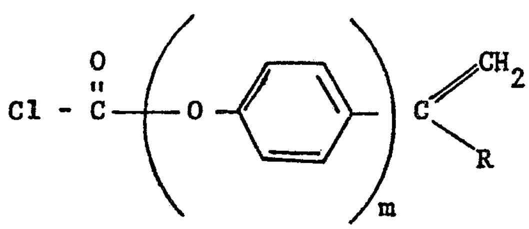

(III),

worin m = O oder 1 und
R = H oder $C_1$—$C_3$—Alkyl bedeuten,
umsetzt.

3. Verfahren zur Modifizierung der Polycarbonate des Patentanspruchs 1, dadurch gekennzeichnet, daß man nach Zusatz von 0,05 bis 5 Gew.-%, bezogen auf Gewicht Polycarbonat, eines Photoinitiators mit UV-Licht bestrahlt.

4. Verfahren gemäß Patentanspruch 3, dadurch gekennzeichnet, daß man nach zusätzlicher Zugabe von 0,05 bis 5 Gew.-%, bezogen auf Gewicht Polycarbonat, eines Photoreduktionsmittels bestrahlt.

5. Verfahren gemäß Patentansprüche 3 und 4, dadurch gekennzeichnet, daß man nach zusätzlicher Zugabe von 0,05 bis 5 Gew.-%, bezogen auf Gewicht Polycarbonat, eines Flammschutzmittels bestrahlt.

6. Modifizierte Polycarbonate, erhältlich nach den Verfahren der Ansprüche 3, 4 oder 5.

**Claims**

1. High-molecular weight aromatic polycarbonates having molecular weights $\overline{M}_w$ (weight-average) between 10,000 and 200,000 which are based on diphenols and monofunctional chain stoppers, characterised in that they correspond to the formula (I)

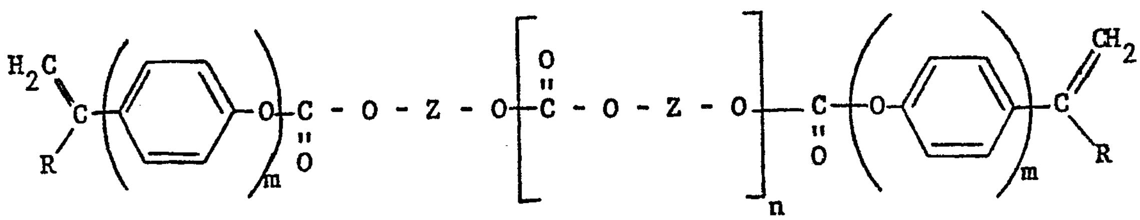 (I),

in which
Z denotes the radical of a diphenol,
n denotes an integer from 20 to 400,
m denotes 0 or 1 and
R denotes H or $C_1$—$C_3$-alkyl.

2. A process for the preparation of the polycarbonates of the patent claim 1, characterised in that diphenols of the formula (II)

HO—Z—OH (II)

wherein
Z is a divalent aromatic radical, and/or their chlorocarbonic acid esters are reacted in accordance with the processes which are known for the preparation of polycarbonates, in a homogeneous or heterogeneous phase system, with compounds of the formula (III)

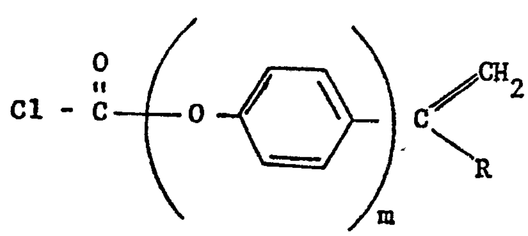 (III),

wherein
m denotes 0 or 1 and
R denotes H or $C_1$—$C_3$-alkyl.

3. A process for the modification of the polycarbonates of patent claim 1, characterised in that the polycarbonate is irradiated with UV light, after adding 0.05 to 5% by weight, relative to the weight of polycarbonate, of a photoinitiator.

4. The process according to patent claim 3, characterised in that irradiation is conducted after 0.05 to 5% by weight, relative to the weight of polycarbonate, of a photo-reducing agent has additionally been added.

5. The process according to patent claims 3 and 4, characterised in that irradiation is conducted after 0.05 to 5% by weight, relative to the weight of polycarbonate, of a flameproofing agent has additionally been added.

6. Modified polycarbonates, obtainable according to the processes of claims 3, 4 or 5.

**Revendications**

1. Polycarbonates aromatiques macromoléculaires présentant des poids moléculaires $\overline{M}w$ (moyenne en poids) de 10 000 à 200 000, à base de diphénols et de coupeurs de chaîne monofonctionnels, caractérisés en ce qu'ils répondent à la formule I

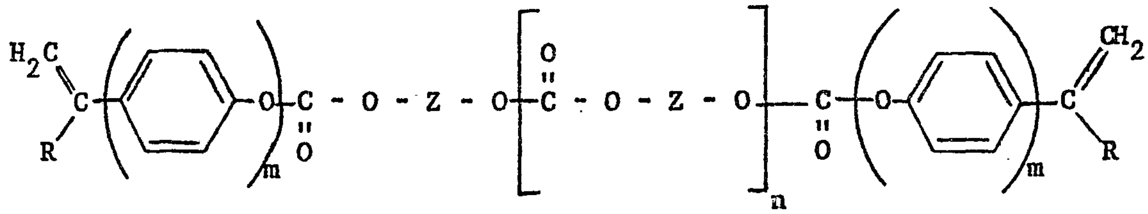

(I),

dans laquelle Z est le reste d'un diphénol,
n est un nombre entier de 20 à 400,
m est égal à 0 ou 1, et
R représente l'hydrogène ou un groupe alkyle en $C_1$—$C_3$.

2. Procédé de préparation des polycarbonates selon la revendication 1, caractérisé en ce que l'on convertit des diphénols de formule II

$$HO—Z—OH \quad (II),$$

dans laquelle Z est un reste aromatique divalent, et/ou leurs esters chlorocarboniques par les procédés usuels pour la préparation des polycarbonates, en phase homogène ou hétérogène, avec utilisation de composés répondant à la formule III

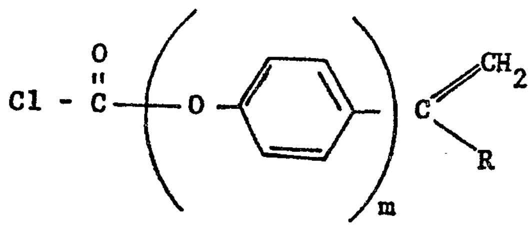

(III),

dans laquelle m est égal à 0 ou 1 et
R représente l'hydrogène ou un groupe alkyle en $C_1$—$C_3$.

3. Procédé pour modifier les polycarbonates selon la revendication 1, caractérisé en ce que, après adjonction de 0,05 à 5% de leur poids d'un photo-inducteur, on les soumet à irradiation à la lumière ultraviolette.

4. Procédé selon la revendication 3, caractérisé en ce qu'on les soumet à irradiation après adjonction, en outre, de 0,05 à 5%, par rapport au poids du polycarbonate, d'un agent photoréducteur.

5. Procédé selon les revendications 3 et 4, caractérisé en ce qu'on les soumet à irradiation après adjonction, en outre, de 0,05 à 5%, par rapport au poids de polycarbonate, d'un agent ignifugeant.

6. Polycarbonates modifiés obtenus par les procédés des revendications 3, 4 ou 5.